# EUROPÄISCHE PATENTSCHRIFT

(11) **EP 3 098 070 B1**
(45) Veröffentlichungstag und Bekanntmachung des Hinweises auf die Patenterteilung: **15.07.2020**
(21) Anmeldenummer: 16171421.7
(22) Anmeldetag: 25.05.2016
(51) Int. Cl.: B32B 27/08, B32B 27/30

(54) **VERPACKUNGSELEMENT**
PACKAGING ELEMENT
ÉLEMENT D'EMBALLAGE

(30) Priorität: 29.05.2015 AT 504412015
(43) Veröffentlichungstag der Anmeldung: 30.11.2016
(73) Patentinhaber: Lenzing Plastics GmbH & Co KG, 4860 Lenzing (AT)
(72) Erfinder: Brandstätter, Andreas, 4851 Gampern (AT); Schlögl, Sandra, 8152 Geistthal-Södingberg (AT); Kramer, Rebecca, 84032 Altdorf (DE); Riess, Gisbert, 8700 Leoben (AT)
(74) Vertreter: Fabian, Ferdinand

(56) Entgegenhaltungen:
- EP-A2- 0 281 893
- EP-A2- 1 256 598

## Beschreibung

Die Erfindung betrifft ein Verpackungselement aus einem Verbundwerkstoff umfassend eine polymere Trägerschicht und eine mit der polymeren Trägerschicht verbundene Sperrschicht, die ein Polymer aufweist, wobei das Polymer ausgewählt ist aus einer Gruppe umfassend Polyvinylalkohol und Polyvinylalkoholcopolymere.

Weiter betrifft die Erfindung ein Verfahren zur Herstellung eines Verpackungselementes aus einem Verbundwerkstoff umfassend eine polymere Trägerschicht und eine mit der polymeren Trägerschicht verbundene Sperrschicht, die ein Polymer aufweist, wobei das Polymer ausgewählt ist aus einer Gruppe umfassend Polyvinylalkohol und Polyvinylalkoholcopolymere.

Es sei bereits an dieser Stelle darauf hingewiesen, dass Angaben zu Normen so zu verstehen sind, dass die jeweiligen Normen in der am Anmeldetag dieser bzw. der prioritätsbegründenden Patentanmeldung gültigen Fassung gemeint sind.

Sperrschichtverpackungen bestehen derzeit meistens aus Verbunden mit einer Aluminiumschicht als Barriere gegen Wasser und Wasserdampf, um das Packgut zu schützen. Aluminium hat aber den Nachteil, dass es in Hinblick auf die Gesundheit eines Menschen nicht unbedenklich ist. Zudem haben diese Mehrschichtverbunde den Nachteil der schlechten bzw. aufwändigen Verwertbarkeit der gebrauchten Verpackungen, weil diese Sperrschichtverpackungen nicht ohne weiteres thermisch verwertet werden können, da Aluminium thermische Prozesse oftmals stört.

Im Stand der Technik ist auch Polyvinylalkohol (PVOH) als Schichtmaterial für Sperrschichten bekannt. So beschreibt z.B. die DE 695 32 378 T2 eine Polymerfilmstruktur, welche einen der Coronaentladung oder der Flammbehandlung unterzogenen hydrophoben Polyolefinträger und eine feuchtigkeitsbeständige Grundierungsschichtzusammensetzung auf mindestens einer Oberfläche des behandelten hydrophoben Polyolefinträgers umfasst, wobei die feuchtigkeitsbeständige Grundierungsschichtzusammensetzung miteinander vernetzten Polyvinylalkohol und Harnstoff umfasst, wobei zwischen dem Träger und der Beschichtung Urethanbindungen vorhanden sind, und wobei die Polymerfilmstruktur Sperreigenschaften für Sauerstoff und Geschmack/Geruch aufweist. In dieser Druckschrift wird ausgeführt, dass PVOH wasserlöslich und folglich für den Angriff von Feuchtigkeit empfindlich ist. Die geringe Wasserbeständigkeit von PVOH schränkt dessen Verwendung als Sperrschicht auf die wenigen Anwendungszwecke ein, bei denen nahezu wasserfreie Bedingungen vorherrschen. Es sei eine Anzahl von Verfahren bekannt, um die Wasserbeständigkeit von PVOH zu verbessern, keines liefert jedoch vollkommen befriedigende Ergebnisse. Trotz verschiedener bisher praktizierter Verfahren neigt PVOH noch zum Weichwerden, Quellen und einem Verlust der Haftfestigkeit, wenn es Wasser oder sogar Wasserdampf ausgesetzt wird. Wenn sie auf hydrophobe Oberflächen, wie Polyolefine, aufgebracht werden, haften PVOH enthaltende Beschichtungen nicht gut und sind nicht feuchtigkeitsbeständig.

Eine Methode zur Verbesserung der Feuchtigkeitsbeständigkeit besteht darin, wie dies aus der DE 692 29 798 T2 bekannt ist, den Polyvinylalkohol zu vernetzen. Diese Druckschrift beschreibt eine Mehrschichtfolie umfassend ein orientiertes Polymersubstrat, das an sich den Durchgang von Sauerstoff und Wasserdampf erlaubt, eine Grundierungsschicht auf mindestens einer Oberfläche des Substrats, eine Schicht aus vernetztem Polyvinylalkohol auf der Grundierungsschicht und eine Schicht aus einem innigen Gemisch eines Homo- oder Copolymers von Vinylalkohol mit einem Ethylen- Acrylsäure-Copolymer. Doch auch in dieser Druckschrift wird ausgeführt, dass das Abscheiden von Metall, insbesondere Aluminium, auf diesen Folien erwünscht ist, da das Aussehen verbessert wird und noch eine weitere Schicht bereitgestellt wird, die dem Eindringen von Sauerstoff und Wasserdampf entgegenwirkt.

Die EP 0 281 893 A2 beschreibt eine Verbundfolie zur Herstellung von evakuierten Schlauchbeutelpackungen aus thermoplastischen Kunststoffen mit einer besonders niedrigen Sauerstoffdurchlässigkeit, die wenigstens eine biaxial streckorientierte Schicht aus einem Polymeren enthaltend Vinylalkoholeinheiten und eine Schicht aus einem Polyolefin enthält.

Aus der EP 1 256 598 A2 ist eine Sauerstoff-Barrierebeschichtung umfassend Polyvinylalkohol und Stärke bekannt.

Es ist die Aufgabe der vorliegenden Erfindung ein Verpackungselement bereitzustellen, das eine nichtaluminiumbasierte Sperrschicht gegen Wasserdampf aufweist.

Diese Aufgabe der Erfindung wird mit dem eingangs genannten Verpackungselement gelöst, bei dem die Sperrschicht eine Wasserdampfdurchlässigkeit von maximal 0,8 g/(m²d), insbesondere von maximal 0,05 g/(m²d), bei 23 °C und 85 % relativer Luftfeuchtigkeit gemäß NORM ISO 15106-2:2003 aufweist, und einen Anteil an dem Polymer von mindestens 90 Gew.-% aufweist, wobei das Polymer ausgewählt ist aus einer Gruppe umfassend unvernetzten Polyvinylalkohol, wasserlösliche Polyvinylalkoholcopolymere, wie Poly(Vinylalkohol-co-Vinylamin), Poly(Vinylalkohol-co-Ethylenglykol), Poly(Vinylalkohol-co-Acrylamid), Poly(Vinylalkohol-co-Acrylsäure) und das Verpackungselement keine Metallschichten aufweist.

Die Aufgabe der Erfindung wird eigenständig auch mit dem eingangs genannten Verfahren gelöst, nach dem die Sperrschicht mit einer Wasserdampfdurchlässigkeit von maximal 0,8 g/(m²d), insbesondere von maximal 0,05 g/(m²d), bei 23 °C und 85 % relativer Luftfeuchtigkeit gemäß NORM ISO 15106-2:2003 eingesetzt wird, und mit einem Anteil an dem Polymer von mindestens 90 Gew.-% hergestellt wird, wobei das Polymer ausgewählt wird aus einer Gruppe umfassend unvernetzten Polyvinylalkohol, wasserlösliche Polyvinylalkoholcopolymere, wie Poly(Vinylalkohol-co-Vinylamin), Poly(Vinylalkohol-co-Ethylenglykol), Poly(Vinylalkohol-co-Acrylamid), Poly(Vinylalkohol-co-Acrylsäure) hergestellt wird und wobei das Verpackungselement ohne Metallschichten hergestellt wird.

Von Vorteil ist, dass durch die Vermeidung von Aluminium in dem Verpackungselement, sodass also das Verpackungselement aluminiumfrei ist, kann die Recyclierbarkeit des Verpackungselementes vereinfacht bzw. verbessert werden. Insbesondere kann die Recyclierbarkeit verbessert werden, wenn für die Sperrschicht ein unvernetzter Polyvinylalkohol eingesetzt wird, da dieser bekanntlich wasserlöslich ist, wodurch die Trennung von den weiteren Bestandteilen des Verpackungselementes vereinfacht werden kann. Es ist somit auch kein Einsatz von organischen Lösungsmitteln erforderlich, wodurch die Umweltverträglichkeit des Verpackungselementes - und auch des Herstellungsverfahrens - verbessert werden kann. Das Ergebnis, dass ein unvernetzter Polyvinylalkohol als Wasserdampfsperre in derartigen Verpackungselementen einsetzbar ist, ist überraschend, da - wie voranstehend ausgeführt - in der Literatur zu finden ist, dass Polyvinylalkohol aufgrund dessen Wasserlöslichkeit unvernetzt bzw. unbehandelt bzw. ohne Modifikation nicht eingesetzt werden kann. Ein weiterer Vorteil ist die Biokompatibilität von Polyvinylalkohol, d.h. dass er nicht toxisch ist. Zudem ist Polyvinylalkohol für die Verwendung im Kontakt mit Lebensmitteln bereits zugelassen, sodass keine aufwändigen Zulassungsverfahren durchlaufen werden müssen. Ein weiterer Vorteil ist die optische Transparenz der Verpackungen, die mit Aluminium als Sperrschschicht nicht erzielbar ist. Es ist damit möglich, Qualitätskontrollen (möglicherweise auch inline von bereits verpackten Gütern) und Inspektionen (z.B. Zoll) einfacher durchzuführen, da man die Verpackung nicht öffnen muss.

Zur weiteren Verbesserung dieser Vorteile kann gemäß einer Ausführungsvariante des Verpackungselementes vorgesehen sein, dass die Sperrschicht ausschließlich aus dem Polymer besteht, insbesondere ausschließlich aus einem nicht vernetzten Polyvinylalkohol besteht. Nach einer anderen Ausführungsvariante des Verpackungselementes kann vorgesehen sein, dass die Sperrschicht eine Schichtdicke aufweist, die ausgewählt ist aus einem Bereich von 0,5 µm bis 90 µm. Überraschenderweise wurde festgestellt, dass mit einer Schichtdicke der Sperrschicht von über 90 µm keine weitere wesentliche bzw. keine weitere Verringerung der Wasserdampfdurchlässigkeit erreicht werden kann.

Ebenso überraschend ist es, dass eine weitere Verringerung der Wasserdampfdurchlässigkeit erreicht werden kann, wenn gemäß einer Ausführungsvariante des Verpackungselementes die Sperrschicht aus zwei oder mehreren übereinander angeordneten, insbesondere miteinander verbundenen, Einzelschichten besteht. Es liegt daher die Vermutung nahe, dass die Sperrwirkung vorwiegend auf Grenzflächeneigenschaften beruht.

Vorzugsweise sind dabei alle Einzelschichten aus dem gleichen Polymer hergestellt, insbesondere aus Polyvinylalkohol, da damit die Verbindung der Einzelschichten miteinander verbessert werden kann.

Weiter ist bevorzugt, wenn die Einzelschichten eine Schichtdicke aufweisen, die ausgewählt ist aus einem Bereich von 0,5 µm bis 10 µm, da damit in Bezug auf die Gesamtschichtdicke der Sperrschicht ein relativ hoher Anteil an Grenzflächen zwischen den Schichten des Verpackungselementes bereitgestellt werden kann.

Nach einer weiteren Ausführungsvariante des Verpackungselementes kann vorgesehen sein, dass auf der Sperrschicht zumindest eine weitere Polymerschicht angeordnet ist bzw. wird, die insbesondere mit der Sperrschicht verbunden ist. Es kann damit eine weitere Reduktion des Wertes der Wasserdampfdurchlässigkeit erreicht werden, da damit eine zusätzliche Grenzfläche zwischen dem Polymer der Sperrschicht und dem weiteren Polymer erzeugt wird.

Insbesondere kann gemäß einer Ausführungsvariante vorgesehen sein, dass der Verbundwerkstoff, aus dem das Verpackungselement hergestellt ist, aus mehreren übereinander angeordneten, insbesondere miteinander verbundenen, Einheiten besteht, wobei die Einheiten jeweils aus der Trägerschicht und der Sperrschicht bestehen. Dazu kann in weiteren Verfahrensschritten zur Herstellung des Verpackungselementes auf die Sperrschicht eine weitere Polymerschicht aufgebracht werden und auf diese weitere Polymerschicht wieder eine Sperrschicht aufgetragen und mit der weiteren Polymerschicht verbunden werden. Diese weiteren Verfahrensschritte können auch mehrmals wiederholt werden. Durch die geschaffenen Grenzflächen zwischen der Trägerschicht und dem Polymer der Sperrschicht und die Abfolge dieser Schichten und damit der Grenzflächen können die Barriereeigenschaften des Verpackungselementes gegenüber Wasserdampf vergleichbar mit den Barriereeigenschaften von Verbunden mit einer Aluminiumschicht (Wasserdampfdurchlässigkeit < 0,05 g/(m²d)) erreicht werden.

Durch den Einsatz eines unvernetzten Polyvinylalkohols mit einem Hydrolysegrad gemäß ISO 15023-2:2006-06-01 von mindestens 95 Mol.-%, kann die Anzahl der zwischen der Trägerschicht und der Sperrschicht ausgebildeten Wasserstoffbrücken erhöht werden, wodurch die Grenzflächeneigenschaften zwischen diesen beiden Schichten, und damit die Wasserdampfbarrierewirkung, positiv beeinflusst werden kann.

Eine Verbesserung der Barrierewirkung der Sperrschicht gegenüber Wasserdampf kann weiter erreicht werden, wenn ein Polyvinylalkohol eingesetzt wird, der einen Kristallinitätsgrad von mindestens 40 % (bestimmt mittels DSC lt. DIN EN ISO 11357-7:2013-04) aufweist. Es kann damit zusätzlich zu der durch die Grenzfläche(n) bedingten Barrierewirkung eine Reduktion der Wasserdampfdurchlässigkeit durch das Polymer an sich erreicht werden.

Aus den gleichen Gründen kann vorgesehen werden, dass ein Polyvinylalkohol verwendet wird, der ein Molekulargewicht zwischen 110.000 g/mol und 135.000 g/mol (bestimmt mittels GPC lt. DIN 55672-3:2007-08) aufweist.

Gemäß einer Ausführungsvariante des Verfahrens zur Herstellung des Verpackungselementes kann vorgesehen sein, dass aus dem Polymer für die Sperrschicht eine Lösung mit einem Anteil an dem Polymer zwischen 2 Gew.-% und 50 Gew.-% hergestellt wird und diese Lösung auf die Trägerschicht aufgerakelt wird. Obwohl prinzipiell auch andere Herstellungsverfahren für das Verpackungselement in Frage kommen, beispielsweise das Verkleben der Sperrschicht mit der Trägerschicht, wurde im Rahmen der Evaluierung der Erfindung festgestellt, dass eine Reduktion der Wasserdampfdurchlässigkeit des Verpackungselementes erreicht werden kann, wenn die Sperrschicht aufgerakelt wird. Es wird vermutet, dass dabei ebenfalls die Eigenschaften der Grenzfläche zwischen der Trägerschicht und der Sperrschicht entsprechend beeinflusst werden.

Zum besseren Verständnis der Erfindung wird diese anhand der nachfolgenden Beschreibung näher erläutert.

Einführend sei festgehalten, dass die in der Beschreibung gewählten Lageangaben, wie z.B. oben, unten, seitlich usw. auf die unmittelbar beschriebene Ausführungsform des Verpackungselements bezogen sind und sind diese Lageangaben bei einer Lageänderung sinngemäß auf die neue Lage zu übertragen.

Das, insbesondere folienartige, Verpackungselement (Verpackungsfolie) besteht aus einem Verbundwerkstoff, der in der einfachsten Ausführungsvariante des Verpackungselementes aus einer polymeren Trägerschicht (T) und einer Sperrschicht (S) gebildet wird bzw. daraus besteht, also zweischichtig aufgebaut ist. Die Sperrschicht ist mit der Trägerschicht verbunden.

Die (thermoplastische) Trägerschicht besteht vorzugsweise aus einem (synthetischen) Polymer, das ausgewählt ist aus einer Gruppe umfassend oder bestehend aus Polyolefine, Polyester, wie beispielsweise Polyethylenterephthalat (PET) oder Polylactide (PLA), Polyamide, Polystyrol.

Besonders bevorzugt besteht die Trägerschicht aus Polyethylen oder Polypropylen. Das Polyethylen kann PE, HDPE, UHMWPE, LDPE oder LLDPE sein.

Die Trägerschicht kann eine Schichtdicke aufweisen, die ausgewählt ist aus einem Bereich von 50 µm bis 300 µm, wobei auch dünnere oder dickere Trägerschichten verwendet werden können, da - wie dies im Nachfolgenden noch näher erläutert wird - die Barriereeigenschaften des Verpackungselementes gegen die Permeation von Wasserdampf hauptsächlich bzw. zur Gänze von der Ausbildung der Grenzfläche zwischen den Polymerschichten und von der Auswahl des Polymers für die Herstellung der Sperrschicht abhängen.

Die Sperrschicht besteht aus einem Polymer bzw. ist polymerbasierend aufgebaut, wobei in letzterem Fall der Anteil des Polymers an der Sperrschicht mindestens 90 Gew.-% ist, insbesondere ausgewählt aus einem Bereich von 90 Gew.-% und 99,99 Gew.-%. Es ist aber auch möglich (und bevorzugt), wenn die Sperrschicht ausschließlich aus dem Polymer besteht.

Das Polymer der Sperrschicht ist ausgewählt aus einer Gruppe umfassend oder bestehend aus unvernetztem Polyvinylalkohol, wasserlösliche Polyvinylalkoholcopolymere, wie Poly(Vinylalkohol-co-Vinylamin), Poly(Vinylalkohol-co-Ethylenglykol), Poly(Vinylalkohol-co-Acrylamid), Poly(Vinylalkohol-co-Acrylsäure). Besonders bevorzugt wird für die Sperrschicht unvernetzter Polyvinylalkohol verwendet.

Die Sperrschicht weist eine Wasserdampfdurchlässigkeit von maximal 0,8 g/(m²d), insbesondere von maximal 0,05 g/(m²d), bei 23 °C und 85 % relativer Luftfeuchtigkeit gemäß ISO 15106-2:2003 auf.

Die Sperrschicht kann eine Schichtdicke aufweisen, die ausgewählt ist aus einem Bereich von 0,5 µm bis 90 µm, insbesondere aus einem Bereich von 1 µm bis 50 µm.

Neben der zweischichtigen Ausführungsvariante des Verpackungselementes sind im Rahmen der Erfindung auch Ausführungsvarianten möglich, die mehr als zwei Schichten aufweisen.

So kann vorgesehen werden, dass die Sperrschicht aus zwei oder mehreren übereinander angeordneten Einzelschichten (E) besteht. Die Einzelschichten sind insbesondere miteinander verbunden, d.h. dass jeweils zwei übereinander angeordnete Einzelschichten miteinander verbunden sind. Die Anzahl der Einzelschichten kann ausgewählt sein aus einem Bereich von 2 bis 20, insbesondere aus einem Bereich von 3 bis 15.

Das Verpackungselement weist also bei dieser Ausführungsvariante die Schichtabfolge T-E-E-...-E auf, wobei die Summe aller Einzelschichten E die Sperrschicht S ergibt.

Prinzipiell ist es möglich, dass die Einzelschichten E der Sperrschicht aus unterschiedlichen Polymeren bestehen, wobei die Polymere ausgewählt sind aus der voranstehend angeführten Gruppe der Polymere für die Sperrschicht. Der Begriff "unterschiedliche Polymere" inkludiert dabei auch, dass zwei oder mehr Polymere eingesetzt werden können, die aus den gleichen Monomeren hergestellt wurden, aber unterschiedliche Eigenschaften aufweisen, also beispielsweise Polyvinylalkohole mit unterschiedlichem Kristallisationsgrad oder unterschiedlichem Hydrolysegrad oder unterschiedlicher Oberflächenpolarität, etc.

Vorzugsweise bestehen die Einzelschichten aus dem gleichen Polymer, also beispielsweise dem gleichen Polyvinylalkohol.

Die Einzelschichten können eine Schichtdicke aufweisen, die ausgewählt ist aus einem Bereich von 0,5 µm bis 10 µm, insbesondere aus einem Bereich von 1 µm bis 6 µm.

Es ist weiter möglich, dass auf der, gegebenenfalls aus mehreren Einzelschichten aufgebauten, Sperrschicht zumindest eine weitere Polymerschicht (P) angeordnet ist, die insbesondere mit der Sperrschicht verbunden ist. Die weitere Polymerschicht kann aus einem Polymer bestehen, das ausgewählt ist aus der Gruppe der Polymere, die voranstehend für die Trägerschicht genannt wurden.

In einer speziellen Ausführungsvariante kann die weitere Polymerschicht aus dem gleichen Polymer bestehen, das für die Trägerschicht verwendet wird, sodass das Verpackungselement den Aufbau T-S-T hat. Die Sperrschicht ist also zwischen zwei Trägerschichten angeordnet und mit diesen verbunden.

Generell kann der Verbundwerkstoff aus mehreren übereinander angeordneten, insbesondere miteinander verbundenen, Einheiten bestehen, wobei die Einheiten jeweils aus der Trägerschicht und der Sperrschicht bestehen. Es sind also Ausführungsvarianten des Verpackungselementes möglich, die beispielsweise folgenden Aufbau haben, wobei die im Folgenden angeführten Beispiele keinen einschränkenden Charakter haben:
T-S-T-S oder T-S-T-S-T-S oder T-S-T-S-T-S-T-S oder T-S-T-S-T-S-T-S-T-S, etc.

Die Anzahl n der aus T und S aufgebauten Einheiten kann ausgewählt sein aus einem Bereich von 2 bis 20, insbesondere aus einem Bereich von 2 bis 10, vorzugsweise aus einem Bereich von 2 bis 5.

Auch bei dieser Ausführungsvariante des Verpackungselementes kann auf der letzten Sperrschicht S die weitere Polymerschicht P angeordnet sein, wobei in einer speziellen Ausführungsvariante dazu die weitere Polymerschicht ebenfalls durch das Polymer der Trägerschicht gebildet werden kann, sodass also das Verpackungselement den Aufbau T-S-(T-S)ₙ₋₁-T haben kann.

Selbstverständlich ist es auch bei diesen Ausführungsvarianten des Verpackungselementes möglich, dass zumindest einzelne der Sperrschichten aus mehreren Einzelschichten aufgebaut sind, wie dies voranstehend ausgeführt wurde.

Es ist weiter möglich, dass beispielsweise zur Anpassung der mechanischen Eigenschaften zusätzlich zumindest ein Gewebe und/oder zumindest ein Gelege und/oder zumindest ein Vliesstoff und/oder zumindest Papier oder ähnliche Verstärkungsschichten in das Verpackungselement eingearbeitet sein können. Weiter kann das Verpackungselement auch übliche Beschichtungen aufweisen, wie z.B. eine Lackierung oder ein Druckbild.

Bei sämtlichen Ausführungsvarianten des Verpackungselementes ist jedoch vorgesehen, dass dieses keine Metallschichten, insbesondere keine Aluminiumschichten, aufweist.

Wie bereits voranstehend ausgeführt, wird die Sperrschicht vorzugsweise aus einem Polyvinylalkohol hergestellt bzw. besteht diese aus einem Polyvinylalkohol.

Dazu wird bevorzugt ein Polyvinylalkohol verwendet, der einen Hydrolysegrad gemäß ISO 15023-2:2006-06-01 von mindestens 95 Mol.-% aufweist, insbesondere von mindestens 99 Mol.-%; vorzugsweise von mindestens 99,99 Mol.-%.

Alternativ oder zusätzlich dazu wird vorzugsweise ein Polyvinylalkohol verwendet, der einen Kristallinitätsgrad von mindestens 40 %, insbesondere mindestens 45 %, vorzugsweise mindestens 55 %, (bestimmt mittels DSC lt. DIN EN ISO 11357-7:2013-04) aufweist.
Alternativ oder zusätzlich zum Hydrolysegrad und/oder Kristallinitätsgrad ist es von Vorteil, wenn der Polyvinylalkohol ein niedriges bis mittleres Molekulargewicht aufweist. Das Molekulargewicht des Polyvinylalkohols kann zwischen 110.000 g/mol und 135.000 g/mol (bestimmt mittels GPC lt. DIN 55672-3:2007-08) betragen.

Beispiele für derartige Polyvinylalkohole werden in den nachstehenden Ausführungsbeispielen wiedergegeben.

Generell kann das Verpackungselement auf unterschiedlichen Wegen hergestellt werden. Beispielsweise kann eine Folie aus dem Trägerschichtpolymer mit einer Folie aus dem Sperrschichtpolymer verklebt werden. In diesem Fall empfiehlt sich eine Vorbehandlung der Folie aus dem Trägerschichtpolymer, um die Haftfestigkeit der Folie aus dem Sperrschichtpolymer darauf zu verbessern.

In Versuchen hat sich aber gezeigt, dass eine bessere Sperrwirkung gegen Wasserdampf erreicht werden kann, wenn die Sperrschicht aus einer Lösung des Polymers für die Sperrschicht hergestellt wird. Dabei kann der Anteil des Polymers für die Sperrschicht an dieser Lösung zwischen 2 Gew.-% und 50 Gew.-% betragen. Den Rest auf 100 Gew.-% bildet bevorzugt Wasser. Diese Lösung kann dann nach einem Rakelverfahren, wie dies an sich bekannt ist, auf die Trägerschicht aufgerakelt werden. Es ist aber auch möglich, die Lösung mit anderen Verfahren aufzutragen, z.B. durch Aufwalzen, Aufstreichen, Aufsprühen, Drucken, etc.

Zur Herstellung der voranstehenden Ausführungsvarianten der Schichtabfolgen des Verpackungselementes können dann je nach Bedarf weiter Schichten aus dem Trägerschichtpolymer und/oder dem Sperrschichtpolymer aufgebracht werden, wobei beide oder nur letzteres aufgerakelt werden können. Diese Verfahrensschritte können entsprechend mehrmals wiederholt werden.

Obwohl im Folgenden ausschließlich auf Polyvinylalkohole eingegangen wird, sind die Ergebnisse der Untersuchungen auch auf die anderen voranstehend angegebenen Polymere zur Herstellung der Sperrschicht übertragbar. Weiter wird im Folgenden nur auf Polyethylen als Trägerschichtmaterial eingegangen. Auch hier sind die Ergebnisse der Untersuchungen auch auf die anderen voranstehend angegebenen Polymere zur Herstellung der (thermoplastischen) Trägerschicht übertragbar. Auf die Wiedergabe dieser Einzelergebnisse wurde lediglich aus Übersichtlichkeitsgründen verzichtet.

Für die durchgeführten Tests wurden unterschiedliche Polyvinylalkohol-Typen herangezogen, die in Tabelle 1 wiedergegeben sind. Aus diesen Polyvinylalkohol-Typen wurden 10 Gew.-%ige Lösungen mit deionisiertem Wasser hergestellt. Dazu wurden 50 g des entsprechenden Polyvinylalkohols für 4 h bei 70 °C - 80 °C in 450 g deionisiertem Wasser gelöst und die Lösung anschließend filtriert. Zusätzlich zu den verschiedenen Polyvinylalkohol-Typen wurde der Einfluss verschiedener Vernetzer und Vernetzungskonzentrationen auf die Permeation untersucht. Bei den untersuchten Vernetzern handelte es sich um Maleinsäureanhydrid (MSA) und Polyacrylsäure (PAS). Die mit dem Vernetzer versehenen Polyvinylalkohol-Lösungen wurden anschließend in Petrischalen aus Polystyrol (PS) gegossen und bei 70 °C getempert bzw. vernetzt.

### Herstellung von Verbunden aus Polyethylen und Polyvinylalkohol:

Alternativ zu Folien aus Polyvinylalkohol wurden zur Bestimmung der Permeationseigenschaften von Wasserdampf auch Verbunde aus Polyvinylalkohol (als Sperrschichtmaterial) und Polyethylen (als Trägerschichtmaterial) hergestellt. Die Verbunde wurden einerseits durch Aufrakeln der genannten Polyvinylalkohol-Lösung auf eine Polyethylen-Folie oder durch Verklebung einer Polyethylen- mit einer Polyvinylalkohol-Folie hergestellt.

Um eine Verklebung von Polyethylen und Polyvinylalkohol zu verbessern, ist es von Vorteil, wenn die zu beschichtende Polyethylen-Oberfläche zunächst mittels Corona-Entladung oder einem ähnlichen Verfahren modifiziert bzw. aktiviert wird. Dadurch wird die Polarität der Oberfläche durch den Einbau von Sauerstoff enthaltenden Gruppen erhöht. Nach der Corona Behandlung kann die Polyethylen-Folie mit der Polyvinylalkohol-Folie verklebt werden. Für die Verklebung wurde ein üblicher Zweikomponenten-Kleber eingesetzt.

### Bestimmung der Permeation von Wasserdampf

Von den hergestellten Filmen und Verbunden wurde die Wasserdampfdurchlässigkeit gemessen. Dazu wurde ein Mocon/Permatran W 1 A ASTM F 1249-06 bzw. ein PermeH₂O von Testing Machines, Inc. verwendet. Die Gaskammer des Geräts wird durch die eingespannte Probe in zwei Teile getrennt. Der untere Teil der Kammer wird mit bestimmten Salzlösungen gefüllt, um die gewünschte relative Luftfeuchtigkeit einzustellen. Der obere Teil der Kammer wird mit einem trockenen Spülgas (z.B. Stickstoff) geflutet und gespült. Die Wasserdampfmoleküle, die durch die Probe permeieren werden vom Spülgasstrom erfasst und zu einem Infrarotsensor transportiert. Dieser erfasst die Konzentration des Wasserdampfs. Nachdem sich ein Gleichgewicht eingestellt hat, wird die Messung gestartet.

Für höhere Wasserdampf-Durchlässigkeiten wurde eine gravimetrische Messung nach ÖNORM EN 1931 mittels eines Gravitesters bei 23 °C und 75 % relativer Luftfeuchtigkeit durchgeführt.

In der folgenden Tabelle 1 sind die verwendeten Materialien wiedergegeben.

**Tabelle 1: verwendete Materialien**

| Material | Strukturformel | Hersteller |
|---|---|---|
| PVA | 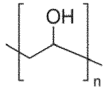 | Sigma Aldrich |
| BF-04 | | Colltec |
| Mowiol 28-99 | | Kuraray |
| Elvanol 90-50 | | DuPont |
| Polyethylen | 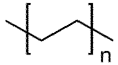 | |
| Polyacrylsäure (PAS) | 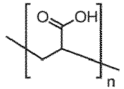 | Sigma Aldrich |
| Maleinsäureanhydrid | 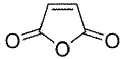 | Fluka Analytical |

Die folgende Tabelle 2 zeigt die Ergebnisse der Messungen der Wasserdampfdurchlässigkeit (WDD) verschiedener Basismaterialien.

**Tabelle 2: Ergebnisse der Messung der Wasserdampfdurchlässigkeit (WDD) der Basismaterialien**

| Probe | WDD [g/(m²d)] | Schichtdicke [µm] |
|---|---|---|
| Aluminium 7 | 0,01-0,02^{(a)} | 7 |
| Aluminium 12 | 0,00-0,01^{(a)} | 12 |
| F8064 (HDPE/LLDPE Folie 75 µm weiß) | 0,75 ^{(a)} | 121 |
| Eval FP101B (EVOH, Kuraray) | 1,30 ^{(a)} | 104 |
| Eval EP105B (EVOH, Kuraray) | 1,05 ^{(a)} | 74 |
| Elvanol 90-50 (DuPont) | 45,71 ^{(b)} | 50 |
| Elvanol 90-50 (DuPont) | 33 ^{(b)} | 90 |
| Elvanol 90-50 (DuPont) | 23,96 ^{(b)} | 130 |
| Elvanol 90-50 (DuPont) + 1 wt.-% PAS | 64,77 ^{(b)} | 50 |
| Elvanol 90-50 (DuPont) + 1 wt.-% PAS | 44,39 ^{(b)} | 90 |
| Elvanol 90-50 (DuPont) + 1 wt.-% PAS | 27,83 ^{(b)} | 130 |
| Elvanol 90-50 (DuPont) + 10 wt.-% PAS | 59,52 ^{(b)} | 50 |
| Elvanol 90-50 (DuPont) + 10 wt.-% PAS | 26,63 ^{(b)} | 90 |
| Elvanol 90-50 (DuPont) + 10 wt.-% PAS | 22,92 ^{(b)} | 130 |

| | | |
|---|---|---|
| ^{(a)} ... Mocon/Permatran W 1 A ASTM F 1249-06, 23 °C, 85 % relative Luftfeuchtigkeit ^{(b)} ... Gravitester ÖNORM EN 1931, 23 °C, 75 % relative Luftfeuchtigkeit | | |

Wie aus Tabelle 2 zu ersehen ist, weist Polyvinylalkohol an sich, verglichen mit einer Aluminiumfolie, einen relativ hohen Wert für die Wasserdampfdurchlässigkeit auf. Ebenso kann aus Tabelle 2 der Einfluss des Vernetzens des Polyvinylalkohols zur Reduktion von dessen Wasserlöslichkeit abgelesen werden. Demzufolge weist der unvernetzte - aber wasserlösliche - Polyvinylalkohol in der Regel bei kleineren Schichtdicken deutlich bessere Werte hinsichtlich der Barriereeigenschaften für Wasserdampf auf. Eine Ausnahme stellt lediglich Elvanol 90-50 (DuPont) + 10 wt.-% PAS dar, wobei die Ursache hierfür noch nicht gefunden wurde.

Die folgende Tabellen 3 zeigt die Ergebnisse der Messung der Wasserdampfdurchlässigkeit von Verbunden, wobei eine 10 Gew.-%ige Polyvinylalkohol-Lösung mit einer Schichtdicke (nass) von 120 µm auf Polyethylen aufgerakelt wurde. Anschließend wurden die Verbunde bei 70 °C im Trockenschrank getrocknet. Die Ergebnisse zeigen, dass die gerakelten Schichten bereits bei geringen Schichtdicken im Bereich von 4-5 µm gute Sperrwirkungen aufweisen. Durch das Aufbringen von zwei bzw. drei PVOH-Schichten im Mehrschichtverbund können die Wasserdampfdurchlässigkeiten auf unter 0,5 g/(m²d) gesenkt werden.

**Tabelle 3: Wasserdampfdurchlässigkeit von Verbunden mit einer gerakelten Polyvinylalkohol-Schicht auf Polyethylen (¹ Schichtdicke der Barriereschicht)**

| Probe | WDD [g/(m²d)] | Schichtdicke¹ [µm] |
|---|---|---|
| Elvanol 90-50 (DuPont) mit 5 wt.-% Schichtsilikat | 0,72 ^{(a)} | 5 |
| Elvanol 90-50 (DuPont) | 0,45 ^{(a)} | 5 |
| BF-04 (Colltec) | 0,79 ^{(a)} | 2 |
| PVA (Sigma Aldrich) | 0,78 ^{(a)} | 4 |
| Mowiol 28-99 (Kuraray) | 0,54 ^{(a)} | 5 |

| | | |
|---|---|---|
| ^{(a)} ... Mocon/Permatran W 1 A ASTM F 1249-06, 23 °C, 85 % relative Luftfeuchtigkeit | | |

In Tabelle 4 sind die Ergebnisse von Mehrschichtverbunden wiedergegeben, bei denen das Verpackungselement mehrere, sich wiederholende Einheiten aus einer Trägerschicht und einer Sperrschicht aufweist. Die Wasserdampfdurchlässigkeit wurde dabei mit einem PermeH₂O nach ISO 15106-2:2003 bei 23 °C und 85 % relativer Luftfeuchtigkeit bestimmt.

**Tabelle 4: Wasserdampfdurchlässigkeit von Verbunden mit mehreren gerakelten Polyvinylalkohol-Schichten auf Polyethylen (¹ Schichtdicke des gesamten Verbundes)**

| Probe | WDD [g/(m²d)] | Schichtdicke¹ [µm] |
|---|---|---|
| Mehrschichtverbunde: PE und PVOH (Elvanol 90-50, gerakelt 120 µm) abwechselnd; 2 Schichten PVOH | 0,13 (Perme H₂O) | 350 |
| Mehrschichtverbunde: PE und PVOH (Elvanol 90-50, gerakelt 120 µm) abwechselnd; 3 Schichten PVOH | 0,04 (Perme H₂O) | 420 |

Die Ergebnisse zeigen deutlich, dass mit mehreren Einheiten T-S der Verbundwerkstoff für das Verpackungselement sehr niedrige Werte für die Wasserdampfdurchlässigkeit zeigt, die in der Größenordnung von jenen für Aluminiumfolien sind.

### Geklebte Verbunde

Für die Herstellung von Verbunden mit Polyvinylalkohol-Folien wurde ein Epoxidkleber verwendet. In der folgenden Tabelle 5 sind die Ergebnisse der Messungen der Wasserdampfdurchlässigkeit dargestellt. Die Wasserdampfdurchlässigkeit wurde dabei mit einem Mocon/Permatran W 1 A ASTM F 1249-06 bei 23 °C und 85 % relativer Luftfeuchtigkeit bestimmt.

**Tabelle 5: Ergebnisse der Messung der Wasserdampfdurchlässigkeit der Mehrschicht- und Sandwichverbunde mit dem Basismaterial F8064 mit einer Schichtdicke von 75 µm (¹ Schichtdicke des gesamten Verbundes)**

| Probe | WDD [g/(m²d)] | Schichtdicke¹ [µm] |
|---|---|---|
| Sandwichverbund: PE + PVOH (90 µm) verklebt mit 2-Komponenten-Kleber (30 µm nass) | 0,31 | 310 |
| Sandwichverbund: PE + PVOH (90 µm) verklebt mit 2-Komponenten-Kleber (30 µm nass); Zusätzliche Imprägnierung der PE-Folie mit aufgerakeltem PVOH (120 µm nass) | 0,3 | 310 |
| Sandwichverbund: PE + PVOH (90 µm) mit 10 wt.-% PAS vernetzt verklebt mit 2-Komponenten-Kleber (30 µm nass) | 0,4 | 285 |
| Sandwichverbund: PE + PVOH (90 µm) mit 10 wt.-% PAS vernetzt verklebt mit 2-Komponenten-Kleber (30 µm nass); Zusätzliche Imprägnierung der PE-Folie mit aufgerakeltem PE (120 µm nass) | 0,41 | 310 |
| Mehrschichtverbunde: PE verklebt mit gegossenen Filmen aus Elvanol 90-50 (DuPont); Abwechselnd eine Schicht PE, eine Schicht PVOH; 2 Schichten PVOH | 0,41 | 504 |
| Mehrschichtverbunde: PE verklebt mit gegossenen Filmen aus Elvanol 90-50 (DuPont); Abwechselnd eine Schicht PE, eine Schicht PVOH; 3 Schichten PVOH | 0,42 | 640 |

Die Ergebnisse zeigen deutlich, dass mit einer Verklebung von Polyvinylalkohol- und PE-Filmen zwar mit dickeren Polyvinylalkohol-Folien (Schichtdicke: 90µm) im ersten Schritt Wasserdampfdurchlässigkeiten im Bereich von 0,3 g/(m d) erreicht werden können. Bei einer Verklebung der Polyvinylalkohol-Folie als Barriereschicht mit PE haben die Untersuchungen aber deutlich gezeigt, dass die Wasserdampfdurchlässigkeit auch durch eine Erhöhung der Schichtdicke der Polyvinylalkohol-Folie bzw. durch eine Erhöhung der Anzahl der Schichten nicht gesenkt werden kann.

Diese Ergebnisse bestätigen, dass die bessere Barrierewirkung der Verbunde mit gerakelter Polyvinylalkohol-Schicht als Sperrschicht vorwiegend auf Grenzflächeneigenschaften zurückzuführen sind, die beim Rakeln ausgebildet werden.

### Weitere Untersuchungen

Zum Nachweise, dass das Verpackungselement nicht nur bei Raumtemperatur eingesetzt werden kann, wurden Sandwichverbunde, die in Tabelle 4 beschrieben sind (4 PE-Schichten und 3 PVOH Schichten) in weiterer Folge bei unterschiedlichen Bedingungen (Temperatur, Luftfeuchtigkeit) ausgelagert und mit einer reinen PE-Trägerfolie verglichen (1 und 4 Lagen). Die Ergebnisse unterstreichen, dass die Verbunde nicht nur bei Raumtemperatur, sondern zumindest auch in einem Temperaturbereich von +60°C oder -10°C eingesetzt werden können bzw. auch noch bei unterschiedlicher Luftfeuchtigkeit funktionieren.

Die Ergebnisse sind in folgender Tabelle 6 wiedergegeben. Die Messung der Wasserdampfdurchlässigkeit erfolgte mit einem PermeH₂O nach ISO 15106-2:2003. Der Schichtaufbau der Verpackungselemente nach der Erfindung war PE-PVOH-PE-PVOH-PE-PVOH-PE.

**Tabelle 6:**

| Nr. | Material | T [°C] / rF [%] | WDD [g/m².d] | Vortrocknung¹ [h] | Flächengewicht [g/m²] | Schichtdicke [µm] |
|---|---|---|---|---|---|---|
| A | 4xTrägerschicht PE + 3xPVOH | 23/85 | nmb Untergrenze | 43 | 368 | ca. 430 |
| B | 4xTrägerschicht PE + 3xPVOH | 23/85 | 0,085 | 32 | 284 | ca. 320 |
| C | 4xTrägerschicht PE | 23/85 | 0,323 | 25 | 228 | ca. 250 |
| D | 1xTrägerschicht PE | 23/85 | 1,175 | 6 | 58 | ca. 63 |
| E | Nr. A - nach Klimatisierung 40°C/50% rF/24 h | 23/85 | 0,016 | 43 | 368 | ca. 430 |
| F | Nr. B - nach Klimatisierung 40°C/50% rF/24 h | 23/85 | 0,087 | 32 | 284 | ca. 320 |
| G | Nr. F - nach Klimatisierung 50°C/50% rF/24 h | 23/85 | nmb Untergrenze | 32 | 284 | ca. 320 |
| H | Nr. G | 50/50 | 1,012 | 32 | 284 | ca. 320 |
| I | Nr. G - nach Messung 50°C/50% rF | 23/85 | 0,131 | 32 | 284 | ca. 320 |
| J | Nr. I - nach Klimatisierung 60°C/50% rF | 23/85 | 0,077 | 32 | 284 | ca. 320 |
| K | Nr. J - nach Klimatisierung -10°C | 23/85 | 0,087 | 32 | 284 | ca. 320 |

| | | | | | | |
|---|---|---|---|---|---|---|
| ¹ ... Nullpunktsbestimmung durch Vortrocknung nmb ...nicht messbar Bemerkungen: rF ... relative Luftfeuchtigkeit Messung Nr. A: weist ähnliche Messcharakteristik auf wie bei Aluminiummaterialien. Läuft letztendlich in Minuswerten aus. Manuelle Stoppung. Messung Nr. B: automatische Stoppung. Messung Nr. C: automatische Stoppung. Messung Nr. D: automatische Stoppung. Messung Nr. E: automatische Stoppung. Ergebnis von Erstmessung A (nicht klimatisiert) wurde bestätigt. Messung Nr. F: automatische Stoppung. Ergebnis von Erstmessung B (nicht klimatisiert) wurde bestätigt. Messung Nr. G: weist ähnliche Messcharakteristik auf wie bei Aluminiummaterialien. Läuft letztendlich in Minuswerten aus. Manuelle Stoppung. Messung Nr. H: dem Verlauf der Vorkonditionierungskurve kann man eine starke Feuchtigkeitsabgabe im Cleaningzeitraum von 3-6h ablesen. Messung Nr. I: automatische Stoppung. Geringfügige Erhöhung zu Ausgangswert Messung Nr. B. Messung Nr. J: manuelle Stoppung nach 60 h Meßzeit. Messung Nr. K: manuelle Stoppung nach 60 h Meßzeit. | | | | | | |

### Herstellung von Verbunden mittels Walzenauftragung von PVOH-Lösungen und Herstellung von Sandwichverbunden mittels HOT-MELT Anlage

Es wurden mehrschichtigen LDPE/PVOH Verbunde als Rollenware hergestellt. Dazu wurden folgende Aufbauten erzeugt:

### Versuch 1 - Einschichtige Barriereschicht (niederviskose PVOH-Lösung 1)

Der Verbund bestand aus einer Lage A (LDPE, Flächengewicht 51,5 g/m²), einer unmittelbar darauf aufgebrachten Lage B (hergestellt aus PVOH-Lösung 1 aus 450 ml vollentsalztem Wasser und 50 g Elvanol 90-50, Flächengewicht ca. 15 g/m²) und einer auf dieser unmittelbar aufgebrachten weiteren Lage A.

### Versuch 2 - Dreischichtige Barriereschicht (niederviskose PVOH-Lösung 1)

Es wurde ein Verbund mit dem Aufbau LDPE-PVOH-LDPE-PVOH-LDPE-PVOH-LDPE hergestellt. Das Flächengewicht des LDPE betrug 120 g/m², jenes der aus der PVOH-Lösung 1 hergestellten Schicht ca. 15 g/m².

### Versuch 3 - Einschichtige Barrierefolie (hochviskose PVOH-Lösung 2)

Der Versuch 1 wurde wiederholt, wobei anstelle der niederviskosen PVOH-Lösung 1 eine hochviskose PVOH-Lösung 2 (450 ml vollentsalztes Wasser, 150 g Elvanol 90-50) verwendet wurde. Aus letztere wurde eine Schicht mit einem Flächengewicht von ca. 50 g/m² hergestellt.

Vor der Auftragung der PVOH-Lösungen wurde bei allen drei Versuchen die LDPE-Folie beidseitig mittels Corona aktiviert

### Herstellung der PVOH-Lösungen

Bei PVOH Lösung 1 wurde das vollentsalzte Wasser auf 70 °C erwärmt. Das PVOH Pulver wurde unter ständigen Rühren (150 U/min) in das Wasser eingerührt. Nach ca. 4 h ist PVOH-Pulver gelöst.

Die PVOH-Lösung 2 wurde nach ca. 30 min Rühren verarbeitet. Die Ist-Temperatur wurde mittels Fühler geregelt.

Die Sandwichverbunde wurden mittels einer üblichen Hotmelt-Anlage hergestellt. Danach wurde die Rollenware bei Raumtemperatur sieben Tage getrocknet.

Die Ergebnisse der Messungen der Wasserdampfdurchlässigkeit sind in folgender Tabelle 7 wiedergegeben. Die Messungen erfolgten mit einem PermeH₂O nach ISO 15106-2:2003.

**Tabelle 7: WDD Messungen von Rollenware**

| | WDD [g/m².d] | Flächengewicht [g/m²] |
|---|---|---|
| Versuch 1 | zu gering/nmb unter Nachweisgrenze | 120 |
| Lösung 1 (Aushärtung 23 °C) | | |
| Versuch 1 | zu gering/nmb unter Nachweisgrenze | 111** |
| Lösung 1 (Aushärtung 50°C/24h) | | |
| Versuch 3 | 0,088* | 155 |
| Lösung 2 (Aushärtung 23 °C) | | |
| Versuch 2 | zu gering/nmb unter Nachweisgrenze | 257 |
| Lösung 1 (Aushärtung 23 °C) | | |

| | | |
|---|---|---|
| * ... Durch den ca. 50 g/m² Auftrag entstehen Falten, die die Wasserdampfdurchlässigkeit erhöhen können. ** ... Die Reduzierung des Gesamtflächengewichtes durch die Wärmelagerung beträgt ca. 10%. | | |

Wie aus den Messergebissen zu ersehen ist, ist die Verarbeitung einer PVOH-Lösung ist auf der Hot-Melt Anlage möglich. Aufgrund der niedrigen Viskosität von Lösung 1 kommt es zum seitlichen Austritt der PVOH-Masse. Mit Erhöhung der Viskosität bei Lösung 2 tritt seitlich keine Masse mehr aus.

### Verbunde mit vernetzten Polyvinylalkohol-Folien

Die in Tabelle 2 wiedergegebenen Ergebnisse der Erhöhung der Wasserdampfdurchlässigkeit wurde auch bei hergestellten Verbunden mit diesen Folien gefunden. Prinzipiell sind also vernetzte Polyvinylalkohol einsetzbar, die besseren Ergebnisse liefern aber die unvernetzten Polyvinylalkohol.

Vorzugsweise wird das Verpackungselement zum Verpacken von Lebensmitteln eingesetzt. Es können aber auch andere, feuchtigkeitsempfindliche (technische) Güter mit dem Verpackungselement verpackt werden.

## Patentansprüche

1. Verpackungselement aus einem Verbundwerkstoff umfassend eine polymere Trägerschicht und eine mit der polymeren Trägerschicht verbundene Sperrschicht, die ein Polymer aufweist, wobei das Polymer ausgewählt ist aus einer Gruppe umfassend Polyvinylalkohol, und Polyvinylalkoholcopolymere, **dadurch gekennzeichnet, dass** die Sperrschicht eine Wasserdampfdurchlässigkeit von maximal 0,8 g/(m²d), insbesondere von maximal 0,05 g/(m²d), bei 23 °C und 85 % relativer Luftfeuchtigkeit gemäß NORM ISO 15106-2:2003 aufweist, dass weiter die Sperrschicht einen Anteil an dem Polymer von mindestens 90 Gew.-% aufweist, wobei das Polymer ausgewählt ist aus einer Gruppe umfassend unvernetzten Polyvinylalkohol, wasserlösliche Polyvinylalkoholcopolymere, wie Poly(Vinylalkohol-co-Vinylamin), Poly(Vinylalkohol-co-Ethylenglykol), Poly(Vinylalkohol-co-Acrylamid), Poly(Vinylalkohol-co-Acrylsäure) und dass das Verpackungselement keine Metallschichten aufweist.

2. Verpackungselement nach Anspruch 1, **dadurch gekennzeichnet, dass** die Sperrschicht ausschließlich aus dem Polymer besteht.

3. Verpackungselement nach Anspruch loder 2, **dadurch gekennzeichnet, dass** die Sperrschicht eine Schichtdicke aufweist, die ausgewählt ist aus einem Bereich von 0,5 µm bis 90 µm.

4. Verpackungselement nach einem der Ansprüche 1 bis 3, **dadurch gekennzeichnet, dass** die Sperrschicht aus zwei oder mehreren übereinander angeordneten, insbesondere miteinander verbundenen, Einzelschichten besteht.

5. Verpackungselement nach Anspruch 4, **dadurch gekennzeichnet, dass** alle Einzelschichten aus dem gleichen Polymer hergestellt sind.

6. Verpackungselement nach Anspruch 4 oder 5, **dadurch gekennzeichnet, dass** die Einzelschichten eine Schichtdicke aufweisen, die ausgewählt ist aus einem Bereich von 0,5 µm bis 10 µm.

7. Verpackungselement nach einem der Ansprüche 1 bis 6, **dadurch gekennzeichnet, dass** auf der Sperrschicht zumindest eine weitere Polymerschicht angeordnet ist, die insbesondere mit der Sperrschicht verbunden ist.

8. Verpackungselement nach einem der Ansprüche 1 bis 7, **dadurch gekennzeichnet, dass** der Verbundwerkstoff aus mehreren übereinander angeordneten, insbesondere miteinander verbundenen, Einheiten besteht, wobei die Einheiten jeweils aus der Trägerschicht und der Sperrschicht bestehen.

9. Verpackungselement nach einem der Ansprüche 1 bis 8, **dadurch gekennzeichnet, dass** der Polyvinylalkohol einen Hydrolysegrad gemäß ISO 15023-2:2006-06-01 von mindestens 95 Mol.-% aufweist.

10. Verpackungselement nach einem der Ansprüche 1 bis 9, **dadurch gekennzeichnet, dass** der Polyvinylalkohol einen Kristallinitätsgrad von mindestens 40 % (bestimmt mittels DSC lt. DIN EN ISO 11357-7:2013-04) aufweist.

11. Verpackungselement nach einem der Ansprüche 1 bis 10, **dadurch gekennzeichnet, dass** der Polyvinylalkohol ein Molekulargewicht zwischen 110.000 g/mol und 135.000 g/mol (bestimmt mittels GPC lt. DIN 55672-3:2007-08) aufweist.

12. Verfahren zur Herstellung eines Verpackungselementes aus einem Verbundwerkstoff umfassend eine polymere Trägerschicht und eine mit der polymeren Trägerschicht verbundene Sperrschicht, die ein Polymer aufweist, wobei das Polymer ausgewählt ist aus einer Gruppe umfassend Polyvinylalkohol, und Polyvinylalkoholcopolymere, **dadurch gekennzeichnet, dass** eine Sperrschicht mit einer Wasserdampfdurchlässigkeit von maximal 0,8 g/(m²d), insbesondere von maximal 0,05 g/(m²d), bei 23 °C und 85 % relativer Luftfeuchtigkeit gemäß NORM ISO 15106-2:2003 eingesetzt wird, dass weiter die Sperrschicht mit einem Anteil an dem Polymer von mindestens 90 Gew.-% hergestellt wird, wobei das Polymer ausgewählt wird aus einer Gruppe umfassend unvernetzten Polyvinylalkohol, wasserlösliche Polyvinylalkoholcopolymere, wie Poly(Vinylalkohol-co-Vinylamin), Poly(Vinylalkohol-co-Ethylenglykol), Poly(Vinylalkohol-co-Acrylamid), Poly(Vinylalkohol-co-Acrylsäure) hergestellt wird und dass das Verpackungselement ohne Metallschichten hergestellt wird.

13. Verfahren nach Anspruch 12, **dadurch gekennzeichnet, dass** aus dem Polymer für die Sperrschicht eine Lösung mit einem Anteil an dem Polymer zwischen 2 Gew.-% und 50 Gew.-% hergestellt wird und diese Lösung auf die Trägerschicht aufgerakelt wird.

14. Verfahren nach Anspruch 12 oder 13, **dadurch gekennzeichnet, dass** in weiteren Verfahrensschritten auf die Sperrschicht eine weitere Polymerschicht aufgebracht wird und auf diese weitere Polymerschicht wieder eine Sperrschicht aufgetragen und mit der weiteren Polymerschicht verbunden wird.

15. Verfahren nach Anspruch 14, **dadurch gekennzeichnet, dass** die weiteren Verfahrensschritte mehrmals wiederholt werden.

## Claims

1. A packaging element made of a composite material comprising a polymeric carrier layer and a barrier layer which is bonded to the polymeric carrier layer and which comprises a polymer, wherein the polymer is selected from a group comprising polyvinyl alcohol and polyvinyl alcohol copolymers, **characterized in that** the barrier layer has a water vapor permeability of a maximum of 0.8 g/(m²d), in particular of a maximum of 0.05 g/(m²d), at 23°C and 85% relative humidity in accordance with ISO STANDARD 15106-2: 2003, that the barrier layer further comprises a proportion of the polymer of at least 90 wt.%, wherein the polymer is selected from a group comprising uncrosslinked polyvinyl alcohol, water-soluble polyvinyl alcohol copolymers, such as poly(vinyl alcohol-co-vinylamine), poly(vinyl alcohol-co-ethylene glycol), poly(vinyl alcohol-co-acrylamide), poly(vinyl alcohol-co-acrylic acid) and that the packaging element comprises no metal layers.

2. The packaging element according to claim 1, **characterized in that** the barrier layer consists solely of the polymer.

3. The packaging element according to claim 1 or 2, **characterized in that** the barrier layer has a layer thickness selected from a range of 0.5 µm to 90 µm.

4. The packaging element according to one of claims 1 to 3, **characterized in that** the barrier layer consists of two or multiple individual layers that are arranged on top of one another, in particular bonded to one another.

5. The packaging element according to claim 4, **characterized in that** all individual layers are made from the same polymer.

6. The packaging element according to claim 4 or 5, **characterized in that** the individual layers each have a layer thickness selected from a range of 0.5 µm to 10 µm.

7. The packaging element according to one of claims 1 to 6, **characterized in that** at least one further polymer layer, which is in particular bonded to the barrier layer, is arranged on the barrier layer.

8. The packaging element according to one of claims 1 to 7, **characterized in that** the composite material consists of multiple units that are arranged on top of one another, in particular bonded to one another, wherein the units each consist of the carrier layer and the barrier layer.

9. The packaging element according to one of claims 1 to 8, **characterized in that** the polyvinyl alcohol has a degree of hydrolysis according to ISO 15023-2:2006-06-01 of at least 95 mol%.

10. The packaging element according to one of claims 1 to 9, **characterized in that** the polyvinyl alcohol has a degree of crystallinity of at least 40% (determined by means of DSC according to DIN EN ISO 11357-7:2013-04).

11. The packaging element according to one of claims 1 to 10, **characterized in that** the polyvinyl alcohol has a molecular weight of between 110,000 g/mol and 135,000 g/mol (determined by means of GPC according to DIN 55672-3:2007-08).

12. A method for producing a packaging element made of a composite material comprising a polymeric carrier layer and a barrier layer which is bonded to the polymeric carrier layer and which comprises a polymer, wherein the polymer is selected from a group comprising polyvinyl alcohol and polyvinyl alcohol copolymers, **characterized in that** a barrier layer having a water vapor permeability of a maximum of 0.8 g/(m²d), in particular of a maximum of 0.05 g/(m²d), at 23°C and 85% relative humidity in accordance with ISO STANDARD 15106-2: 2003 is used, that the barrier layer is further produced comprising a proportion of the polymer of at least 90 wt.%, wherein the polymer which is selected from a group comprising uncrosslinked polyvinyl alcohol, water-soluble polyvinyl alcohol copolymers, such as poly(vinyl alcohol-co-vinylamine), poly(vinyl alcohol-co-ethylene glycol), poly(vinyl alcohol-co-acrylamide), poly(vinyl alcohol-co-acrylic acid) is produced and that the packaging element is produced without any metal layers.

13. The method according to claim 12, **characterized in that** a solution with a proportion of the polymer for the barrier layer of between 2 wt.% and 50 wt.% is prepared from the polymer for the barrier layer and this solution is coated with a squeegee onto the carrier layer.

14. The method according to claim 12 or 13, **characterized in that**, in further method steps, a further polymer layer is applied to the barrier layer and a barrier layer is, in turn, applied to this further polymer layer and bonded to the further polymer layer.

15. The method according to claim 14, **characterized in that** the further method steps are repeated multiple times.

## Revendications

1. Elément d'emballage en un matériau composite comprenant une couche support polymère et une couche barrière liée à la couche support polymère, qui présente un polymère, le polymère étant choisi dans un groupe comprenant le poly(alcool vinylique) et des copolymères de poly(alcool vinylique), **caractérisé en ce que** la couche barrière présente une perméabilité à la vapeur d'eau au maximum de 0,8 g/(m²d), en particulier au maximum de 0,05 g/(m²d), à 23 °C et pour une humidité relative de l'air de 85 % selon la NORME ISO 15106-2:2003 ; en outre que la couche barrière présente une proportion du polymère d'au moins 90 % en poids, le polymère étant choisi dans un groupe comprenant le poly(alcool vinylique) non réticulé, des copolymères de poly(alcool vinylique) solubles dans l'eau tels que le poly(alcool vinylique-co-vinylamine), le poly(alcool vinylique-co-éthylèneglycol), le poly(alcool vinylique-co-acrylamide), le poly(alcool vinylique-co-acide acrylique) ; et que l'élément d'emballage ne présente pas de couches métalliques.

2. Elément d'emballage selon la revendication 1, **caractérisé en ce que** la couche barrière est constituée exclusivement du polymère.

3. Elément d'emballage selon la revendication 1 ou 2, **caractérisé en ce que** la couche barrière présente une épaisseur de couche qui est choisie dans une plage de 0,5 µm à 90 µm.

4. Elément d'emballage selon l'une des revendications 1 à 3, **caractérisé en ce que** la couche barrière est constituée de deux ou plusieurs couches individuelles, disposées les unes au-dessus des autres, en particulier liées les unes aux autres.

5. Elément d'emballage selon la revendication 4, **caractérisé en ce que** toutes les couches individuelles sont fabriquées en les mêmes polymères.

6. Elément d'emballage selon la revendication 4 ou 5, **caractérisé en ce que** les couches individuelles présentent une épaisseur de couche qui est choisie dans une plage de 0,5 µm à 10 µm.

7. Elément d'emballage selon l'une des revendications 1 à 6, **caractérisé en ce que** sur la couche barrière est disposée au moins une couche polymère supplémentaire, qui en particulier est liée à la couche barrière.

8. Elément d'emballage selon l'une des revendications 1 à 7, **caractérisé en ce que** le matériau composite est constitué de plusieurs unités disposées les unes au-dessus des autres, en particulier liées les unes aux autres, chacune des unités étant constituée de la couche support et de la couche barrière.

9. Elément d'emballage selon l'une des revendications 1 à 8, **caractérisé en ce que** le poly(alcool vinylique) présente une degré d'hydrolyse selon ISO 15023-2:2006-06-01 d'au moins 95 % en moles.

10. Elément d'emballage selon l'une des revendications 1 à 9, **caractérisé en ce que** le poly(alcool vinylique) présente un degré de cristallinité d'au moins 40 % (déterminé par ACD selon DIN EN ISO 11357-7:2013-04).

11. Elément d'emballage selon l'une des revendications 1 à 10, **caractérisé en ce que** le poly(alcool vinylique) présente une masse moléculaire entre 110 000 g/mol et 135 000 g/mol (déterminée par CPG selon DIN 55672-3:2007-08).

12. Procédé de fabrication d'un élément d'emballage en un matériau composite comprenant une couche support polymère et une couche barrière, liée à la couche support polymère, qui présente un polymère, le polymère étant choisi dans un groupe comprenant le poly(alcool vinylique), et des copolymères de poly(alcool vinylique), **caractérisé en ce qu'**on utilise une couche barrière ayant une perméabilité à la vapeur d'eau au maximum de 0,8 g/(m²d), en particulier au maximum de 0,05 g/(m²d), à 23 °C et pour une humidité relative de 85 % selon la norme ISO 15106-2:2003 ; que, en outre, on fabrique la couche barrière avec une proportion du polymère d'au moins 90 % en poids, le polymère étant choisi dans un groupe comprenant le poly(alcool vinylique) non ramifié, le copolymère de poly(alcool vinylique) soluble dans l'eau tels que le poly(alcool vinylique-co-vinylamine), le poly(alcool vinylique-co-éthylèneglycol), le poly(alcool vinylique-co-acrylamide), le poly(alcool vinylique-co-acide acrylique) ; et que l'élément d'emballage est fabriqué sans couches métalliques.

13. Procédé selon la revendication 12, **caractérisé en ce qu'**on fabrique à partir du polymère pour la couche barrière une solution présentant une proportion du polymère entre 2 % en poids et 50 % en poids, et **en ce qu'**on applique cette solution à la racle sur la couche support.

14. Procédé selon la revendication 12 ou 13, **caractérisé en ce que**, dans d'autres étapes du procédé, on applique sur la couche support une couche polymère supplémentaire, et on applique de nouveau une couche barrière sur cette couche polymère supplémentaire, et on la lie à la couche polymère supplémentaire.

15. Procédé selon la revendication 14, **caractérisé en ce que** les autres étapes du procédé sont répétées à plusieurs reprises.
